(19) **Europäisches Patentamt**

**European Patent Office**

**Office européen des brevets**

(11) **EP 1 407 805 B1**

(12) **EUROPEAN PATENT SPECIFICATION**

(45) Date of publication and mention
of the grant of the patent:
**11.05.2005 Bulletin 2005/19**

(51) Int Cl.7: **B01D 9/02**

(21) Application number: **02078710.7**

(22) Date of filing: **10.09.2002**

(54) **Ring crystallizer method and apparatus**

Kreislaufkristallisator - Methode und Apparat

Cristalliseur à circuit - méthode et appareil

(84) Designated Contracting States:
**AT BE BG CH CY CZ DE DK EE ES FI FR GB GR
IE IT LI LU MC NL PT SE SK TR**

(43) Date of publication of application:
**14.04.2004 Bulletin 2004/16**

(73) Proprietor: **Niro Process Technology B.V.
5201 AG 's-Hertogenbosch (NL)**

(72) Inventors:
• **Verschuur, René-Jeroen
 5235 EK 'S-Hertogenbosch (NL)**
• **Scholz, Reinhard Uwe
 47647 Kerken (DE)**
• **Schreurs, Bartholomeus Antonius
 5242 GR Rosmalen (NL)**
• **Roos, Arnout
 5212 PJ 'S-Hertogenbosch (NL)**

(74) Representative: **van Westenbrugge, Andries et al
 Nederlandsch Octrooibureau
 P.O. Box 29720
 2502 LS The Hague (NL)**

(56) References cited:
 **EP-A- 0 948 984     US-A- 4 004 886
 US-A- 4 734 102**

## Description

## Background of the invention

The invention relates to a crystallization method for forming crystals of a substance in a solution, a suspension, or a mixture of liquids, in particular ice crystals from an aqueous solution or organic crystals from an organic melt, the method comprising the steps of:

- crystallizing the solution to form a crystal slurry by means of cooling in a heat exchanger; and

- feeding the crystal slurry from an outflow side of the heat exchanger to an inflow side of the heat exchanger via a recirculation duct and separating at least a part of the crystals from the liquid.

The invention further relates to a crystallizer assembly for use in the method.

The performance of a suspension based crystallization process is typically limited by the step where the pure crystals are physically separated from the impurity containing liquid phase. Wash columns are used for applications where a perfect crystal liquid separation is required. Typical technical examples are the freeze concentration of liquid foods where no aromas and other valuable substances are lost with the ice crystals or the ultra-purification of organic melts where impurity components are perfectly separated from the pure organic crystals. Uniform crystal size distribution and a minimum crystal size of about 100 μm - 200 μm are named in the state of the art as precondition for operation of a wash column and consequently a lot of effort is put in optimizing the upstream suspension crystallization process.

The freeze concentration (FC) process according to the preamble of claim 1, which is described in e.g. US patent No. 4,004,886 is a proven technique for the concentration of liquid food products (e.g. beer, wine, coffee extracts, fruit- and vegetable juices, aroma extracts and the like) as well as specific waste waters, biochemical, pharmaceutical and other aqueous solutions. In this FC process the concept of separate nucleation and growth (SNG) is applied. This SNG process is characterized in that a crystal free liquid is pumped into a scraped surface heat exchanger (SSHE) where small nuclei are formed. These nuclei are then fed to a homogenously mixed ripening vessel. There the adiabatic ripening conditions allow for gentle, close to equilibrium and thus almost perfect crystal growth and finally results in spherical crystals with an average particle size of about 300 μm - 800 μm and a narrow crystal size distribution.

The main disadvantages of this SNG process are its complex design with the related high investment costs, a large necessary power input and certain disadvantages which are inherent to a filter application. The design complexity is caused to a large extent by the need to equip the vessel with a sophisticated mixing device and a special scraped filter to allow for the crystal-free feed to the SSHE. The pressure drop over this filter requires the vessel to be designed according to the relevant pressure regulations.

The complexity of design also holds for the SSHE since the SNG concept requires the production of fine nuclei. The design is specific in that it allows for a very small gap between the outer shell of the SSHE and the inner rotor in the range of several mm only. In this way extremely short residence times with the corresponding high under cooling are achieved. These conditions provide for the required small crystal size. The manufacturing of the SSHE has to follow very accurate mechanical tolerances to assure perfect centering of the rotor, especially for larger units. Deviations will cause mal-distribution of product around the circumference of the SSHE.

Another shortcoming of the SNG concept is the fact that the filter requires remarkable efforts for cleaning in its application for sanitary design.

In EP 948 984 a crystallization method is proposed where nucleation and growth takes place at the same time in just one scraped surface drum crystallizer. A disadvantage of this method is that it still requires the use of a filter for discharge of the mother liquor with essentially the same drawbacks as described above for the SNG concept. A further disadvantage of this method is the fact that the surface area for heat exchange and the volume of the vessel are linked with each other by geometrical relations. Usually the volume of a crystallizer vessel is determined by the need for a certain residence time. In a crystallizer design according to EP 948 984 the size of the scraped surface drum crystallizer is always governed by the required surface area for the heat exchange. The drum crystallizer, which represents a pressure vessel, will thus have to be built much larger than principally required with respect to residence time.

The object of the present invention is to provide a method for the production of solids in a liquid by cristallization, which method does not have the disadvantages mentioned above, or at least to a substantially reduced amount. It is a further object of the present invention to provide a crystallization apparatus of low complexity, relatively low power input and which is easily cleaned. It is again an object of the present invention to provide a crystallization method, which is feasible to produce crystals that are suitable to be separated in a wash column. The present invention is characterized according to the characterizing part of claims 1 and 11.

The present invention is characterized by a recirculation pump that is included in a recirculation duct, wherein the slurry is continuously supplied through the recirculation duct from an outflow side of a heat exchanger to the inflow side of the same heat exchanger such that the under cooling at the outlet of the heat exchanger is continuously decreased during the cycle and transferred into crystal growth, until it's lowest value is reached shortly before re-entering the heat exchanger. This results in a cyclic pattern of under cooling. The under cooling at the outlet of the heat exchanger shall be the equilibrium temperature minus 0.5 to 0.9 times the meta-stable region ($\Delta T_{max}$) of the crystallizing substance and at the inlet of the heat exchanger this under cooling shall be reduced to the equilibrium temperature minus 0 to 0.3 times the meta-stable region of the crystallizing substance.

The term equilibrium temperature $T_{eq}$ as is used herein, means the temperature at which the solid phase and the liquid phase of a solution of a certain concentration are at equilibrium. The meta-stable region, $\Delta T_{max}$. is the difference between the equilibrium temperature of a solution and the temperature at which nucleation occurs.

It has been unexpectedly found that this simple setup is suitable to produce crystals of sufficient size having a comparable narrow size distribution at a lower residence time, which can be subsequently effectively separated.

In particular it was found that wash columns as, e.g. described in US patent No. 3,872,009 (piston wash column), in US patent No. 4,481,169 (screw type wash column) or in US patent No. 4,734,102 (hydraulic wash column) can be operated with crystals which are less perfect than those produced in the concept of separate nucleation and growth.

Said recirculation duct is forming a closed duct of such a diameter and length, so as to providing sufficient volume and therefore residence time for the crystals to grow. The duct diameter shall be adjusted such that at a given flow rate, the flow velocity in the duct is between 0.2 m/s and 3 m/s and preferably between 0.5 m/s and 1.5 m/s to prevent back-mixing and settling or floating of the crystals. The larger the difference between crystal and fluid density the higher the required fluid velocity shall be chosen. If this difference exceeds 300 kg/m$^3$ the velocity should be higher than 0.5 m/s. Usually the duct diameter is between 100 mm and 2000 mm while the length is between 10 m and 100 m and preferably between 15 m and 30 m. The orientation of the straight duct sections of the recirculation duct could be either vertically or horizontally. The vertical configuration is preferably limited to two straight duct sections, which are connected with large radius bends to form a closed loop. Additional crystallizer volume can be generated by extending the vertical pipelines to larger diameters. The horizontal configuration is preferably used for applications where the total duct length exceeds 20 m. In this configuration the total duct length is split into sections of straight pipes - each with a length of about 4 m to 12 m - which again are connected with large radius bends to form a winded closed loop. The horizontal ducts can be mounted with a slight slope (e.g. 2 %) to allow for complete emptying of the crystallizer.

The mass flow rate ($\dot{m}_{circ.}$) in the recirculation duct is given by an energy balance for the heat exchanger and the requirement that the temperature difference ($\Delta T$) between the inlet and the outlet of the heat exchanger must not exceed the meta-stable region ($\Delta T_{max}$.).

$$\dot{Q}_{cool} + \dot{Q}_{cryst.} + \dot{Q}_{loss} = \dot{m}*c_{p,l}*\Delta T$$

$\dot{Q}_{cool}$    is the energy flux for cooling
$\dot{Q}_{cryst.}$    is the energy flux for crystallization
$\dot{Q}_{loss}$    is the energy loss
$\dot{m}*$    is the mass flow rate in the recirculation duct
$c_{p,l}$    is the specific heat of the crystals suspension

In total the energy for cooling ($\dot{Q}_{cool}$), for crystallization ($\dot{Q}_{cryst.}$) and for compensation of losses ($\dot{Q}_{loss}$) has to be transported through the heat transfer surface of the heat exchanger and results in a temperature decrease of the recirculating suspension.

$$\frac{\dot{m}_{circ.}}{\dot{m}_{cryst.}} = (\eta_{cool} + \eta_{loss} + 1) * \frac{\Delta h}{c_{p,l} * \Delta T}$$

$\eta_{cool}$ & $\eta_{loss}$ are determined by the following equation

$$\eta_{cool} = (\frac{\dot{Q}_{cool}}{\dot{Q}_{cryst.}}), \; \eta_{loss} = (\frac{\dot{Q}_{loss}}{\dot{Q}_{cryst.}}).$$

This actual $\Delta T$ is influenced by the specific heat of the suspension ($c_{p,l}$) and especially by the specific mass flow rate of the suspension

$$(\frac{\dot{m}_{circ.}}{\dot{m}_{cryst.}}).$$

In the crystallization method according to the present invention, no filter or separator is included in a recirculation path between the outlet of the heat exchanger and the inlet of the heat exchanger. This results in a high through put and a low pressure drop across the recirculation duet and hence in low energy consumption.

According to a preferred embodiment of the present invention a SSHE is used as heat exchanger. The SSHE has a jacketed outer shell for supply of the cooling and a rotating central axis with knives attached to prevent the heat exchanger surface from plugging. The annular zone between the inner rotor and the outer shell does not require the narrow gap with the corresponding high mechanical tolerances like in the conventional SNG process, but extends for 15 mm at least and preferably extends to between 0.1 and 0.4 times the outer diameter of the heat exchanger. At values lower than 15 mm, problems with slurry blockage, pressure build-up and uneven flow distribution can occur. Depending on the viscosity and slurry density of the crystallizing fluid specific heat flux ratios between 10,000 W/m$^2$ and 25,000 W/m$^2$ are achieved. It was found that a low heat transfer coefficient can be compensated to a certain extent by a higher temperature difference over the SSHE.

To allow for reliable long term operation, the SSHE can be supplied with a specifically designed outlet head. The design of the outlet head is such that it allows for a smooth transition of the suspension velocity from the inside of the SSHE to the outflow of the SSHE. Preferably the suspension velocity stays constant and most preferably the velocity increases towards the outflow of the SSHE. In this configuration it was found that blockage of the outlet of the SSHE with crystals can reliably be prevented. Without such novel outlet head blockage has frequently been observed after exceeding an operation time of about 8 hours.

Generally large volume flow rates between 100 m$^3$/h and 6000 m$^3$/h are required to limit the maximum under cooling in the ring crystallizer. Since the crystals pass the re-circulation pump in the crystallization duct about 100 to 2000 times before they are discharged from the crystallizer, special attention has to be paid to limit crystal breakage in these pumps. The pressure drop in the crystallization duct is generally limited to figures below 0.7 bar and frequently below 0.2 to 0.4 bar. For these flow conditions the application of axial flow pumps, which are commercially available by e.g. Allweiler, Klaus Union and KSB, is recommended. The impeller of the recirculation pump shall run at a tip speed of below 15 m/s and more preferably below 12 m/s.

The ring crystallizer should be operated at a slurry concentration of between 10 wt% and 40 wt% and more preferably between 25 wt% and 30 wt%. With these crystal concentrations there will be sufficient crystals at all places within the crystallizer to transform the under cooling into crystal growth and thus to limit the under cooling to an allowable value within the meta-stable region. In this way primary nucleation is prevented. For a given crystallizer volume high slurry densities lead to the presence of a large number of crystals in the ring crystallizer. Since crystals are discharged at a given rate the individual crystal will remain for a longer period in the crystallizer.

In a further embodiment of the invention and in case a SSHE is used as heat exchanger, it can be contemplated to use two different pumps in order to uncouple the relevant flow regimes in the crystallization duct and in the heat exchanger. Since the maximum heat exchanger surface of a single SSHE is limited to about 12 m$^2$, larger capacities can be realized by arranging more SSHE's in a parallel configuration. Such a process scheme has the additional advantage that in case a heat exchanger needs to be molten down, the process can be continued with the remaining heat exchangers staying in operation. It is also possible to proactively melt down the heat exchangers in a cyclic pattern according to a predefined schedule to preventively avoid blockage at all.

In general the method of the present invention produces slightly smaller crystals than the conventional separate nucleation and growth (SNG) process but surprisingly it has been found that the difference in crystal size is not very pronounced. Ice crystals that are produced according to the crystallization method of the present invention have a spherical shape. Their diameter is generally below 900 μm. The average particle size has been found to depend on the concentration of the soluble substance. For 5 wt% the particle size is generally between 300 μm and 500 μm; it decreases to values between 200 μm and 400 μm at 20 wt% and further decreases to values between 150 μm and 350 μm at 40 wt%. At 50 wt% the particle size is found to be between 100 μm and 200 μm.

In another embodiment of the present invention it can be contemplated to use a shell & tube heat exchanger (S&T HE) as heat exchanging device. Since ice crystals, as well as organic crystals are very sensitive with respect to the formation of encrustations this configuration can only be run continuously if

(i) The specific heat flux through the heat exchanger wall is limited to below 1000 W/m$^2$ and preferably to below 500 W/m$^2$.

(ii) The specific mass flow rate in the recirculation duct per kg of crystallized substance is about 50 to 300 times the reciprocal of the meta-stable region $(1/\Delta T_{max})$, preferably about 100 to 150 times the reciprocal of the meta-stable region, preferably 8 to 5 times or 17 to 25 times.

(iii) The velocity in the heat exchanger pipes is above 1.5 m/s and preferably above 1.8 m/s.

(iv) The suspension density is as high as possible but at least above 10 wt%.

The total cooling load which is transported through the heat transfer surface is to a large amount directly transformed into crystal growth. These crystals are then periodically scraped off from the heat exchanger wall. Which causes the resulting under cooling of the liquid to be much lower than in a configuration with a S&T HE. This is the reason why a ring crystallizer with a SSHE can be operated at recirculation rates that are 2 to 6 times lower than in its application with a S&T HE.

Organic crystals that are produced according to the crystallization method of the present invention frequently have a monoclinic or an orthorombic crystal structure. The relation of the dimensions length : height : width of the above structures is often according to the following ratios: 1 ... 10 : 1 ... 2 : 1. The length of the crystals is frequently between 100 μm and 1000 μm, commonly between 200 μm and 600 μm.

The produced crystals could be separated by all means of known mechanical separation devices, like centrifuges, filters and the like. Since it has been unexpectedly found that the crystal quality is also good enough to allow for a complete separation of the produced crystals on a wash column, this separation process is included in the present invention as preferred crystal liquid separator. Since the piston type wash column is the least sensitive one with respect to quality of the feed crystals in terms of crystal size and crystal size distribution, this wash column is the preferred type in combination with the crystallization process of the present invention.

The invention is not only directed to the crystallization method as such, but also to the use thereof for concentrating aqueous solutions and purifying organic melts. The crystallization method of the present invention can be combined with a packed bed wash column for the separation of the pure crystals.

In general the crystallization method of the present invention is suitable for concentrating liquid foods such as coffee, beer, wine, vinegar, fruit juices, citrus juices, vegetable juices, fish extract, seafood extract, meat extract, herb extracts, aroma extracts and the like, for the desalination of sea water or for concentrating waste waters and other aqueous solutions such as aqueous pharmaceutical or bio-chemical solutions and the like.

More in particular the crystallization method of the present invention could also be used for the crystallization of organic melts, such as acrylic acid, acetic acid, benzoic acid caprolactam, cresol, maleic acid, MDI, monochloroacetic acid, m-Xylene, naphthalene, p-DCB, p-NCB, p-Xylene, phenol, TDI, and the like.

## Brief description of the drawings

The invention will be described in detail with reference to the accompanying drawings, wherein:

Fig. 1 is a phase diagram of a mixture of substances A and B, showing the equilibrium temperature and the meta-stable region ($\Delta T_{max}$);
Fig. 2 is a schematic temperature versus time diagram of the under cooling realized at the outlet of the heat exchanger and the subsequent loss of this under cooling in the recirculation duct ;
Fig. 3 is a schematic drawing of a ring crystallizer with a scraped surface heat exchanger (SSHE) and a wash column as crystal-liquid separator, according to the present invention;
Fig. 4 is a cross-sectional view of a prior art SSHE;
Fig. 5 is a cross-sectional view of the SSHE according to Fig. 3 along the line V-V;
Fig. 6 is a longitudinal cross-sectional view of the outlet side of SSHE of Fig. 3;
Fig. 7 is a schematic drawing of another preferred embodiment of the process according to the invention where a separate pump is used for supply of the SSHE with the aim to uncouple flow regimes in the ring crystallizer and in the SSHE;
Fig. 8 is a schematic drawing of a modification of the process according to Fig.7 where various parallel SSHE's are arranged with one ring crystallizer for easy scale up purposes; and
Fig. 9 is a schematic drawing of a ring crystallizer with a shell & tube heat exchanger (S&T HE) as heat exchanger device and a wash column as crystal-liquid separator.

## Description of the detailed embodiment

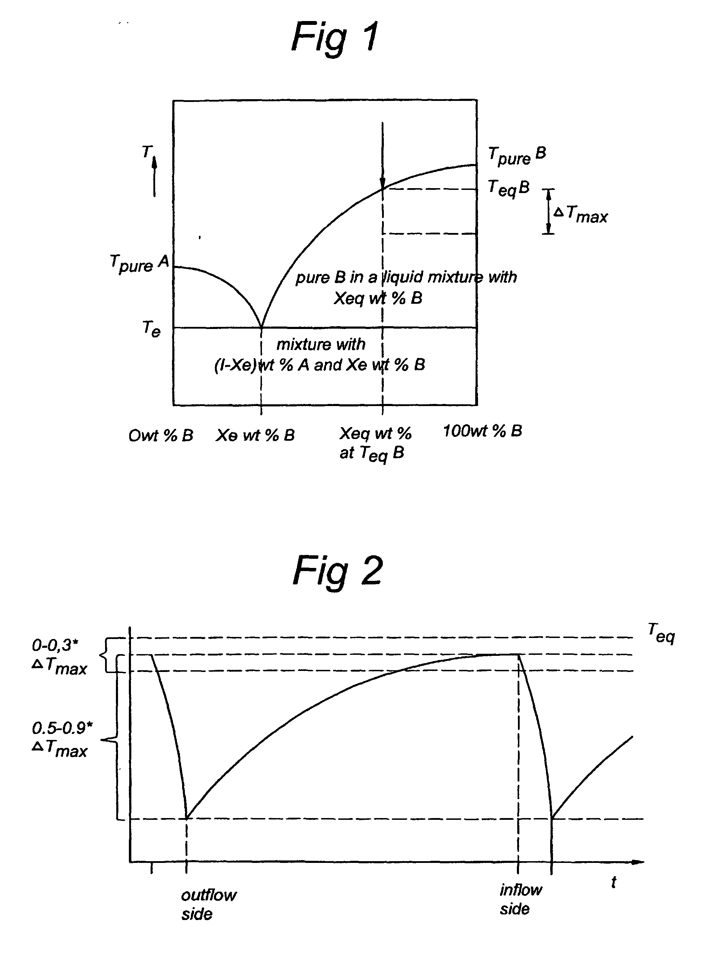

Fig. 1 is a phase diagram, giving temperature versus concentration of a mixture of substances A and B. At the equilibrium temperature, $T_{eq}$, pure substance B is in equilibrium in a liquid mixture with $X_{eq}$ weight percent of B. The meta stable region $\Delta T_{max}$ is the temperature range below the equilibrium temperature in which no spontaneous nucleation of crystals occurs.

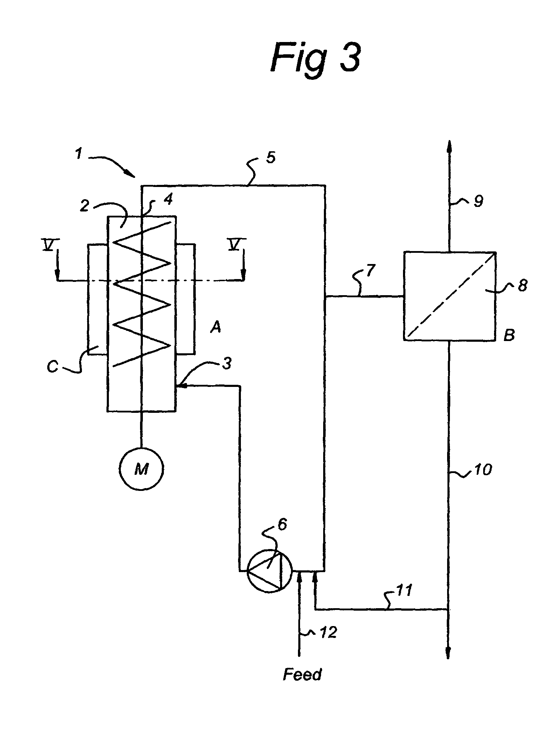

Fig. 2 shows the cyclic undercooling in the heat exchanger and recirculation duct of the crystalliser assembly of the present invention, as described in Figs. 3, 7, 8 and 9. In heat exchanger the crystal slurry is rapidly cooled to 0.5-0.9 times the meta stable region $\Delta T_{max}$, whereas in the recirculation duct, the temperature of the crystal slurry more slowly rises to the equilibrium temperature minus 0-0.3 the meta stable region $\Delta T_{max}$.

Fig. 3 shows a crystalliser assembly 1 with a scraped surface heat exchanger 2. The outlet 4 of the heat exchanger 2 is connected to the inlet 3 via a recirculation duct 5. Recirculation pump 6 recirculates slurry from the outlet 4 to the inlet 3. Through feed line 12 the mixture of substances is supplied to the crystalliser assembly 1. Through line 7 the crystal slurry is transported to a separator 8. Crystals are removed via discharge line 9, whereas the concentrate may be removed via discharge line 10, whereas the remainder of the solution may be recirculated back to the heat exchanger 2 via line 11.

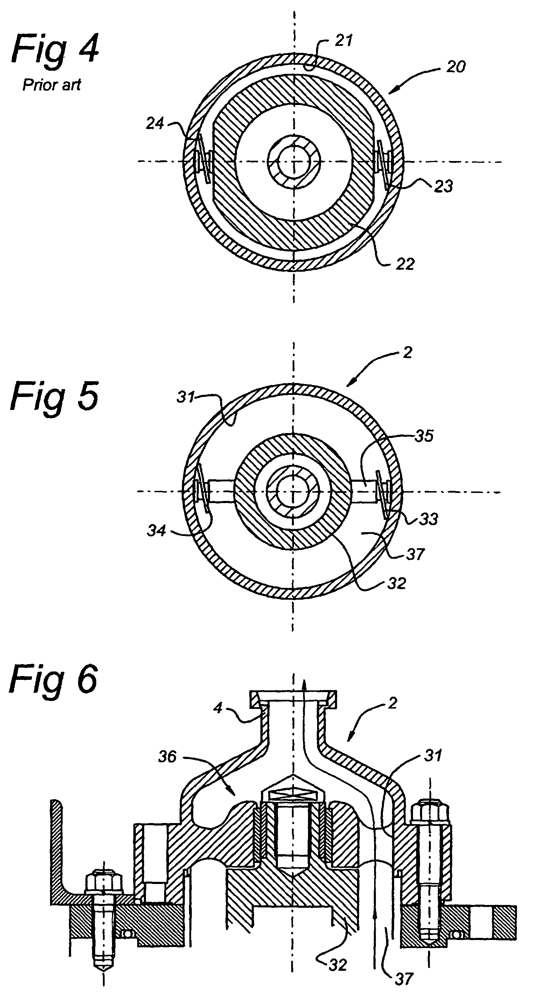

Fig. 4 shows a surface scraped heat exchanger 20 such as known in the prior art. The heat exchanger is provided with a circular cross-section and comprises a rotor 22, carrying two scraping blades 23,24, scraping the heat exchanger wall 21. The diameter of the rotor 22 is relatively large, leaving a small gap between the wall 21 and the rotor, through which the liquid passes with a relatively large velocity.

Fig. 5 shows the heat exchanger 2 of the present invention. The rotor 32 is of relatively small diameter, for instance leaving a gap 37 of a width between 0.1 and 0.4 times the internal diameter D of the inner wall 31. The scraping blades 33, 34 are mounted on arms 35 on the rotor 32. The heat exchanger 2 of the present invention operates with a slurry mixture instead of clear liquid. A larger gap is required according to the present invention to prevent uneven flow regimes and/or pressure build-up. Such a large gap results in reduced mechanical tolerances and hence reduced costs.

Fig 6. shows the specially designed outlet head 36 of the heat exchanger according to the present invention. The flow channel 37 between the rotor 32 and the heat exchanging wall 31 connects via a curved section to the outlet 4, without abruptly changing the flow direction or decelerating or stopping the crystal slurry flow. In this way, undesired accumulation of crystals is prevented.

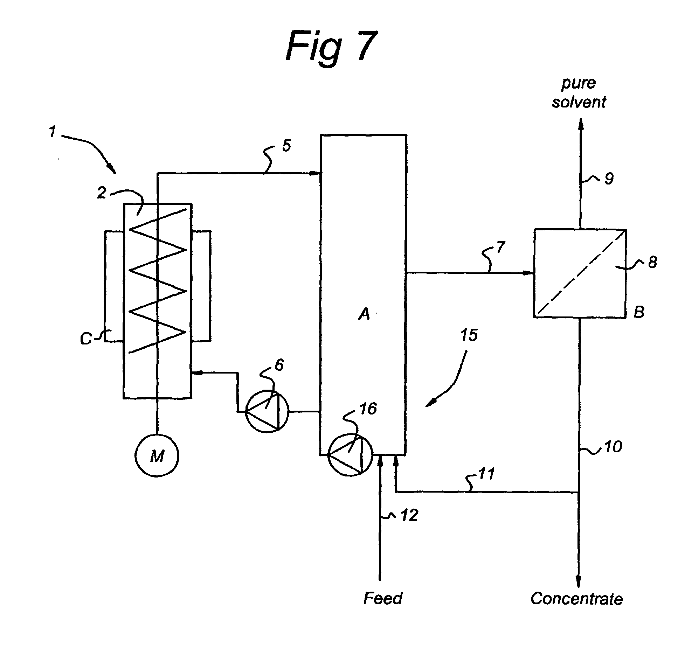

Fig. 7 shows a crystalliser assembly of similar type as shown in Fig. 3, and like parts are indicated with the same reference numerals. In the crystalliser assembly 1 of Fig. 7, an additional loop 15 with second pump 16 are included to form the main circulation loop in which the suspension can be circulated. Smaller amounts of slurry are fed through the heat exchanger 2 to obtain the desired under cooling. The flow through the heat exchanger 2 can be decoupled from the flow through loop 15.

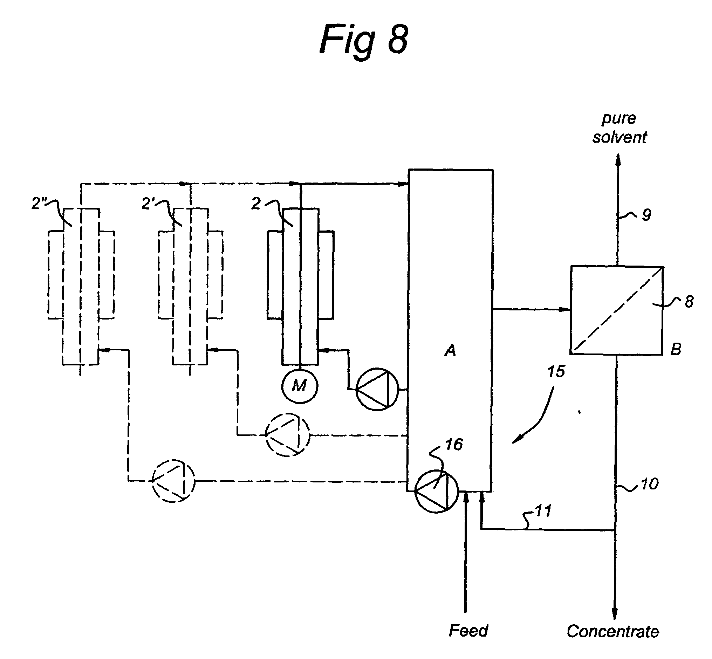

Fig. 8 shows a crystalliser assembly of similar type as shown in Fig. 7, with three heat exchangers 2, 2' and 2" operated in parallel, for increased capacity with standard SSHE.

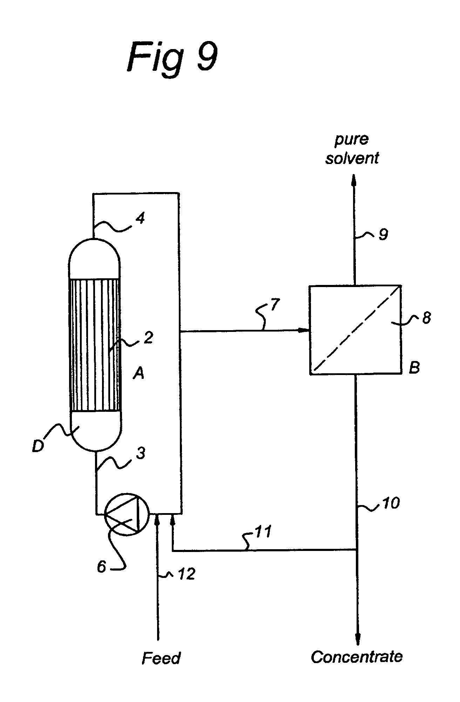

Fig. 9 finally shows an arrangement in which the crystalliser 2 is formed by a shell and tube heat exchanger, of a type such as described in Handbook of Industrial Crystallization, Allen S. Myerson, page 121, Butterworth Heineman 1993.

The following examples are intended only to further illustrate the invention and are not intended to limit the scope of the invention, which is defined by the claims.

EXAMPLE 1

A sugar solution of 17 wt% was concentrated by the formation of ice crystals using the apparatus and arrangement as schematically shown in Fig. 3.

The 17 wt% sugar solution was supplied to the ring crystallizer at a rate of approximately 12 kg/h where it was mixed with crystal slurry being recirculated in the duct at a recirculation rate of approximately 30 m$^3$/h. The ring crystallizer was sized to hold approx. 50 1 of crystal-liquor suspension. The duct had a diameter of 80 mm and a total length of approx. 10 m. The ice slurry density in the duct was approximately 20 wt% and the slurry velocity was about 1.7 m/s. The heat exchanger had an effective heat exchange surface of 0.28 m$^2$ and the temperature difference between the solution and the cooling medium was kept at approximately 8 K resulting in a heat flux of about 10,000 W/m$^2$. 35 kg/h of the ice suspension were continuously removed from the ring crystallizer via line 7 to the wash column B. The ice crystals were separated from the liquor and discharged from the process through line 9 as pure water at a rate of 7 kg/h. A 40 wt% concentrated sugar product flow of 5 kg/h was discharged through line 10, while the reminder of the sugar solution (23 kg/h) was recycled back to the ring crystallizer via line 11. The spherical ice crystals which were obtained had an average size of 250 μm.

EXAMPLE 2

A sugar solution of 5 wt% was concentrated by the formation of ice crystals using the apparatus and arrangement as schematically shown in Fig. 8.

The sugar solution was supplied to the ring crystallizer at a rate of 17 kg/h where it was mixed with crystal slurry being recirculated in the duct at a recirculation rate of approximately 30 m$^3$/h. The ring crystallizer was sized to hold approx. 70 l of crystal-liquor suspension. It was composed of one straight duct of 6 m length and a double-pipe heat exchanger of the same length which were connected by bends with each other to form one closed loop. The duct had a diameter of 80 mm and a total length of approx. 14 m. The ice slurry density in the duct was approximately 15 wt% and the slurry velocity was about 1.7 m/s. The heat exchanger had an effective heat exchange surface of 1.5 m$^2$ and the temperature difference between the solution and the cooling medium was kept at approximately 1.5 K resulting in a heat flux of about 500 W/m$^2$. 17 kg/h of the ice suspension were continuously removed from the ring crystallizer containing approx. 2.5 kg/h of ice crystals. The crystals had the same spherical shape as produced in the process of Example 1 and an average size of 500 μm.

EXAMPLE 3

A sugar solution of 14 wt% was concentrated by the formation of ice crystals using the apparatus and arrangement as schematically shown in Fig. 7.

The 14 wt% sugar solution was supplied to the ring crystallizer at a rate of 560 kg/h where it was mixed with crystal slurry being recirculated in the duct at a recirculation rate of approximately 95 m$^3$/h. The ring crystallizer was sized to hold approx. 880 l of crystal-liquor suspension. It was composed of 8 straight ducts of 6 m length which were connected by large radius bends with each other to form one closed loop. The duct had a diameter of 150 mm and a total length of approx. 50 m. The ice slurry density in the duct was approximately 25 wt% and the slurry velocity was about 1.5 m/s. From the ring crystallizer approx. 8 m$^3$/h of crystal liquor suspension were supplied to the scraped surface heat exchanger. The heat exchanger had an effective heat exchange surface of 1.68 m$^2$ and the temperature difference between the solution and the cooling medium was kept at approximately 12 K resulting in a heat flux of about 23,000 W/m$^2$. 1200 kg/h of the ice suspension were continuously removed from the ring crystallizer via line 7 to the wash column B. The ice crystals were separated from the liquor and discharged from the process through line 9 as pure water at a rate of 300 kg/h. A 30 wt% concentrated sugar product flow of 260 kg/h was discharged through line 10, while the reminder of the sugar solution (640 kg/h) was recycled back to the ring crystallizer via line 11. The product crystals which were obtained had an average size of 350 μm and were virtually spherical in shape.

**Claims**

1. Crystallization method for forming crystals of a substance in a solution, a suspension, or a mixture of liquids, in particular ice crystals from an aqueous solution or organic crystals from an organic melt, the method comprising the steps of:

   - crystallizing the solution to form a crystal slurry by means of cooling in a heat exchanger;

   - feeding the crystal slurry from an outflow side of the heat exchanger to an inflow side of the heat exchanger via a recirculation duct and separating at least a part of the crystals from the liquid, **characterized in that** a recirculation pump is included in the recirculation duct wherein the slurry is continuously supplied through the recirculation duct such that the crystals are homogeneously distributed in the duct and the heat exchanger and such that the under cooling at the outlet of the heat exchanger is the equilibrium temperature $T_{eq}$ minus 0.5 to 0.9 times the meta-stable region $\Delta T_{max}$.

2. Crystallization method according to claim 1, wherein no filter or separator is included in a recirculation path between the outlet of the heat exchanger and the inlet of the heat exchanger.

3. Crystallization method according to claim 1 or 2, wherein a scraped surface heat exchanger is used for supply of the cooling **characterized in that** the suspension is passed through a space between a heat exchanging wall and an inner rotor for support of a scraper means, the distance between the inner rotor and the wall being larger than 10 mm, preferably larger than 15 mm and most preferably being between 0.1 and 0.4 times an outer diameter of the heat exchanger.

4. Crystallization method according to claim 3, wherein and the specific heat flux through the heat exchanger wall is limited to a value below 40,000 W/$m^2$, preferably below 30,000 W/$m^2$, and the specific mass flow rate in the recirculation duct per kilogram of crystallized substance is about 8 to 50 times the reciprocal of the meta-stable region and preferably about 17 to 25 times the reciprocal of the meta-stable region.

5. Crystallization method according to claim 1 or 2, wherein a shell and tube heat exchanger is used for supply of the cooling, comprising a number of tubes, wherein the flow rate of the suspension in the tubes is between 1.5 m/s and 3 m/s, and preferably between 1.8 m/s and 2 m/s, the specific heat flux through the heat exchanger wall being limited to a value below 1000 W/$m^2$ and more preferably below 500 W/$m^2$ and also **characterized in that** the specific mass flow rate in the recirculation duct per kilogram of crystallized substance is about 50 to 300 times the reciprocal of the meta-stable region and preferably about 100 to 150 times the reciprocal of the meta-stable region.

6. Crystallization method according to any of claims 1 to 5, wherein a diameter of the recirculation duct is between 100 mm and 2000 mm, the length is between 10 m and 100 m and preferably between 15 m and 30 m such as to reduce the under cooling of the suspension before the inlet of the heat exchanger to a value of between 0 and 0.3 times the meta-stable region.

7. Crystallization method according to claim 6, wherein the flow speed in the recirculation duct is between 0.2 m/s and 3 m/s and preferably between 0.5 m/s and 1.5 m/s.

8. Crystallization method according to any of the preceeding claims, wherein the crystal concentration is between 10 wt% and 40 wt% and preferably between 25 wt% and 30 wt%.

9. Crystallization method according to any of the preceeding claims, wherein the recirculation pump comprises an impeller which is run at a tip speed of below 15 m/s and preferably below 12 m/s.

10. Crystallization method according to any of the preceeding claims, wherein the crystal slurry is supplied to a wash column, preferably a piston type or a screw type wash column and most preferably a piston type wash column.

11. Crystallizer assembly comprising a heat exchanger with an inlet and an outlet for forming a crystal slurry, a recirculation duct connected between the inlet and the outlet for recirculation of the crystal slurry, formed in the heat exchanger from the outlet to the inlet and a separator connected to the heat exchanger for separating crystals from the slurry, **characterised in that**, the recirculation duct comprises a first section at one end connected to the outlet end and with its other end connected to a pump, and a second section with one end connected to the pump and with the other end connected to the inlet, wherein no filter or separator is included in a recirculation path between the outlet of the heat exchanger and the inlet of the heat exchanger.

**12.** Crystallizer assembly according to claim 11, comprising a scraped surface heat exchanger (SSHE) having an outlet and an inlet, and a recirculation duct connecting the outlet to the inlet, **characterized in that** a recirculation pump is connected to the recirculation duct, wherein the SSHE comprises a generally cylindrical vessel having a predetermined diameter and an internal scraping means mounted on a rotor, rotatable around a central axis of the heat exchanger, wherein a distance between the rotor and a wall of the crystallizer is between 0,1 and 0,4 times the diameter of the heat exchanger, preferably at least 15 mm..

**13.** Crystallizer assembly according to claims 11 or 12, wherein the outlet of the heat exchanger is shaped such that the transition of the outflow from the scraped surface heat exchanger into the recirculation duct is gradual such as to maintain a relatively constant suspension velocity or preferably an increasing velocity towards the outflow of the scraped surface heat exchanger.

**14.** Crystallizer according to any of claims 11-13, wherein a diameter of the recirculation duct is between 100 mm and 2000 mm, the length is between 10 m and 100 m and preferably between 15 m and 30 m such as to reduce the under cooling of the suspension before the inlet of the heat exchanger to a value of between 0 and 0.3 times the meta-stable region.

**15.** Crystallizer assembly according to claim 11, comprising a shell and tube heat exchanger (S&T HE), wherein the shell and tube heat exchanger comprises a bundle of individual tubes each with an inner diameter of above 25 mm and preferably above 36 mm.

**Patentansprüche**

**1.** Kristallisationsverfahren zum Bilden von Kristallen einer Substanz in einer Lösung, einer Suspension, oder einer Mischung von Flüssigkeiten, insbesondere Eiskristallen aus einer wässrigen Lösung oder organischen Kristallen aus einer organischen Schmelze, wobei das Verfahren die Schritte umfasst:

- Kristallisieren der Lösung durch Kühlen in einem Wärmetauscher, um einen Kristallschlikker zu bilden;
- Zuführen des Kristallschlickers von einer Ausflussseite des Wärmetauschers zu einer Einflussseite des Wärmetauschers über eine Rezirkulationsleitung und Abtrennen zumindest eines Teils der Kristalle von der Flüssigkeit, **da-**

**durch gekennzeichnet, dass** in der Rezirkulationsleitung eine Rezirkulationspumpe enthalten ist, wobei der Schlicker kontinuierlich durch die Rezirkulationsleitung zugeführt wird, so dass die Kristalle in der Leitung und im Wärmetauscher homogen verteilt sind, und dass die Unterkühlung am Ausgang des Wärmetauschers die Gleichgewichtstemperatur $T_{eq}$ minus das 0,5- bis 0,9-fache des meta-stabilen Gebiets $\Delta T_{max}$ ist.

**2.** Kristallisationsverfahren nach Anspruch 1, wobei in einem Rezirkulationsweg zwischen dem Ausgang des Wärmetauschers und dem Eingang des Wärmetauschers kein Filter oder Separator enthalten ist.

**3.** Kristallisationsverfahren nach Anspruch 1 oder 2, wobei ein Oberflächen-Schaberwärmetauscher zum Zuführen der Kühlung verwendet wird, **dadurch gekennzeichnet, dass** die Suspension durch einen Raum zwischen einer Wärme austauschenden Wand und einem inneren Rotor zum Halten eines Schabermittels durchgeleitet wird, wobei der Abstand zwischen dem inneren Rotor und der Wand größer als 10 mm ist, vorzugsweise größer als 15 mm, besonders vorzugsweise zwischen dem 0,1- und 0,4-fachen eines Außendurchmessers des Wärmetauschers ist.

**4.** Kristallisationsverfahren nach Anspruch 3, wobei der spezifische Wärmefluss durch die Wand des Wärmetauschers auf einen Wert unter 40.000 W/m$^2$, vorzugsweise unter 30.000 W/m$^2$, beschränkt ist, und die spezifische Massenflussrate in der Rezirkulationsleitung pro Kilogramm kristallisierter Substanz ungefähr das 8- bis 50-fache des Reziproken des meta-stabilen Gebiets und vorzugsweise ungefähr das 17- bis 25-fache des Reziproken des meta-stabilen Gebiets ist.

**5.** Kristallisationsverfahren nach Anspruch 1 oder 2, wobei ein mehrere Rohre umfassender Rohrbündelwärmetauscher zum Zuführen der Kühlung verwendet wird, wobei die Flussrate der Suspension in den Rohren zwischen 1,5 m/s und 3 m/s, und vorzugsweise zwischen 1,8 m/s und 2 m/s liegt, wobei der spezifische Wärmefluss durch die Wand des Wärmetauschers auf einen Wert unter 1000 W/m$^2$, besonders vorzugsweise unter 500 W/m$^2$ beschränkt ist, und auch **dadurch gekennzeichnet ist, dass** die spezifische Massenflussrate in der Rezirkulationsleitung pro Kilogramm kristallisierter Substanz ungefähr das 50- bis 300-fache des Reziproken des meta-stabilen Gebiets und vorzugsweise ungefähr das 100- bis 150-fache des Reziproken des meta-stabilen Gebiets ist.

**6.** Kristallisationsverfahren nach einem der Ansprüche 1 bis 5, wobei ein Durchmesser der Rezirkulationsleitung zwischen 100 mm und 2000 mm liegt, die Länge zwischen 10 m und 100 m und vorzugsweise zwischen 15 m und 30 m liegt, um die Unterkühlung der Suspension vor dem Eingang des Wärmetauschers auf einen Wert zwischen dem 0- und 0,3-fachen des meta-stabilen Gebiets zu reduzieren.

**7.** Kristallisationsverfahren nach Anspruch 6, wobei die Strömungsgeschwindigkeit im Rezirkulationskanal zwischen 0,2 m/s und 3 m/s und vorzugsweise zwischen 0,5 m/s und 1,5 m/s liegt.

**8.** Kristallisationsverfahren nach einem der vorhergehenden Ansprüche, wobei die Kristallkonzentration zwischen 10 Gew.% und 40 Gew.% und vorzugsweise zwischen 25 Gew.% und 30 Gew.% liegt.

**9.** Kristallisationsverfahren nach einem der vorhergehenden Ansprüche, wobei die Rezirkulationspumpe ein Kreiselrad umfasst, welches mit einer Spitzengeschwindigkeit von unter 15 m/s und vorzugsweise unter 12 m/s betrieben wird.

**10.** Kristallisationsverfahren nach einem der vorhergehenden Ansprüche, wobei der Kristallschlicker einer Waschsäule, vorzugsweise einer kolbenartigen oder einer schraubenartigen Waschsäule, besonders vorzugsweise einer kolbenartigen Waschsäule, zugeführt wird.

**11.** Kristallisationsanordnung, umfassend einen Wärmetauscher zum Bilden eines Kristallschlickers mit einem Eingang und einem Ausgang, einer mit dem Eingang und dem Ausgang verbundenen Rezirkulationsleitung zum Rezirkulieren des Kristallschlikkers, welcher im Wärmetauscher vom Ausgang zum Eingang gebildet wird, und einen mit dem Wärmetauscher verbundenen Separator zum Trennen von Kristallen vom Schlicker, **dadurch gekennzeichnet, dass** die Rezirkulationsleitung einen ersten Abschnitt, welcher mit einem Ende mit dem Ende des Ausgangs und mit seinem anderen Ende mit einer Pumpe verbunden ist, und einen zweiten Abschnitt, welcher mit einem Ende mit der Pumpe und mit dem anderen Ende mit dem Eingang verbunden ist, umfasst, wobei in einen Rezirkulationsweg zwischen dem Ausgang des Wärmetauschers und dem Eingang des Wärmetauschers kein Filter oder Separator enthalten ist.

**12.** Kristallisationsanordnung nach Anspruch 11, umfassend einen Oberflächen-Schaberwärmetauscher (SSHE) mit einem Ausgang und einem Eingang, und eine den Eingang mit dem Ausgang verbindenden Rezirkulationsleitung, **dadurch gekennzeichnet, dass** die Rezirkulationsleitung mit einer Rezirkulationspumpe verbunden ist, wobei der SSHE ein im Allgemeinen zylindrisches Gefäß mit einem vorgegebenen Durchmesser und ein an einem um eine Hauptachse des Wärmetauschers rotierbaren Rotor befestigtes inneres Schabermittel umfasst, wobei ein Abstand zwischen dem Rotor und einer Wand des Kristallisators zwischen dem 0,1- und 0,4-fachen des Durchmessers des Wärmetauschers, vorzugsweise mindestens 15 mm, ist.

**13.** Kristallisationsanordnung nach Anspruch 11 oder 12, wobei der Ausgang des Wärmetauschers so geformt ist, dass der Übergang des Ausflusses vom Oberflächen-Schaberwärmetauscher in die Rezirkulationsleitung allmählich erfolgt, um eine relativ konstante Geschwindigkeit der Suspension oder vorzugsweise eine zunehmende Geschwindigkeit zum Ausfluss des Oberflächen-Schaberwärmetauschers hin zu erhalten.

**14.** Kristallisationsanordnung nach einem der Ansprüche 11 - 13, wobei ein Durchmesser der Rezirkulationsleitung zwischen 100 mm und 2000 mm liegt, die Länge zwischen 10 m und 100 m und vorzugsweise zwischen 15 m und 30 m liegt, um die Unterkühlung der Suspension vor dem Eingang des Wärmetauschers auf einen Wert zwischen dem 0- und 0,3-fachen des meta-stabilen Gebiets zu reduzieren.

**15.** Kristallisationsanordnung nach Anspruch 11, umfassend einen Rohrbündelwärmetauscher (S&T HE), wobei der Rohrbündelwärmetauscher ein Bündel einzelner Rohre umfasst, wobei jedes einen Innendurchmesser von über 25 mm und vorzugsweise über 36 mm hat.

**Revendications**

**1.** Procédé de cristallisation pour former des cristaux d'une substance dans une solution, une suspension ou un mélange de liquides, en particulier des cristaux de glace à partir d'une solution aqueuse ou des cristaux organiques à partir d'un bain organique, le procédé comprenant les étapes consistant à :

- cristalliser la solution pour former une suspension épaisse de cristaux au moyen d'un refroidissement dans un échangeur de chaleur ;

- faire passer la suspension épaisse de cristaux d'un côté déversement de l'échangeur de chaleur à un côté admission de l'échangeur de chaleur via une conduite de recirculation et séparer au moins une partie des cristaux d'avec le liquide, **caractérisé en ce qu'**une pompe de recirculation est incluse dans la conduite de recirculation, la suspension épaisse étant fournie en continu dans la conduite de recirculation de telle manière que les cristaux sont répartis de façon homogène dans la conduite et l'échangeur de chaleur et de telle manière que le sous refroidissement à la sortie de l'échangeur de chaleur est la température à l'équilibre $T_{eq}$ moins 0,5 à 0,9 fois la région méta-stable $\Delta T_{max}$.

2. Procédé de cristallisation selon la revendication 1, dans lequel aucun filtre ni séparateur n'est inclus dans un chemin de recirculation entre la sortie de l'échangeur de chaleur et l'entrée de l'échangeur de chaleur.

3. Procédé de cristallisation selon la revendication 1 ou 2, dans lequel un échangeur de chaleur à racloirs est utilisé pour le refroidissement, **caractérisé en ce que** l'on fait passer la suspension dans un espace situé entre une paroi d'échange de chaleur et un rotor intérieur servant au support d'un moyen formant racleur, la distance entre le rotor intérieur et la paroi étant supérieure à 10 mm, de préférence supérieure à 15 mm, et mieux encore, comprise entre 0,1 et 0,4 fois le diamètre extérieur de l'échangeur de chaleur.

4. Procédé de cristallisation selon la revendication 3, dans lequel le flux thermique spécifique traversant la paroi de l'échangeur de chaleur est limité à une valeur inférieure à 40 000 W/m$^2$, de préférence inférieure à 30 000 W/m$^2$, et le débit massique spécifique dans la conduite de recirculation par kilogramme de substance cristallisée vaut environ de 8 à 50 fois l'inverse de la région méta-stable et de préférence environ de 17 à 25 fois l'inverse de la région méta-stable.

5. Procédé de cristallisation selon la revendication 1 ou 2, dans lequel un échangeur de chaleur à calandre est utilisé pour le refroidissement, comprenant un certain nombre de tubes, dans lequel le débit de la suspension dans les tubes est compris entre 1,5 m/s et 3 m/s, et de préférence entre 1,8 m/s et 2 m/s, le flux thermique spécifique traversant la paroi de l'échangeur de chaleur étant limité à une valeur inférieure à 1 000 W/m$^2$ et de préférence inférieure à 500 W/m$^2$ et aussi **caractérisé en ce que** le débit massique spécifique dans la conduite de recirculation par kilogramme de substance cristallisée vaut environ de 50 à 300 fois l'inverse de la région méta-stable et de préférence environ de 100 à 150 fois l'inverse de la région méta-stable.

6. Procédé de cristallisation selon l'une quelconque des revendications 1 à 5, dans lequel un diamètre de la conduite de recirculation est compris entre 100 mm et 2 000 mm, la longueur est comprise entre 10 m et 100 m et de préférence entre 15 m et 30 m afin de réduire le sous refroidissement de la suspension avant l'entrée de l'échangeur de chaleur à une valeur comprise entre 0 et 0,3 fois la région méta-stable.

7. Procédé de cristallisation selon la revendication 6, dans lequel la vitesse d'écoulement dans la conduite de recirculation est comprise entre 0,2 m/s et 3 m/s et de préférence entre 0,5 m/s et 1,5 m/s.

8. Procédé de cristallisation selon l'une quelconque des revendications précédentes, dans lequel la concentration en cristaux est comprise entre 10 % et 40 % en poids, et de préférence entre 25 % et 30 % en poids.

9. Procédé de cristallisation selon l'une quelconque des revendications précédentes, dans lequel la pompe de recirculation comprend une roue que l'on fait tourner à une vitesse périphérique inférieure à 15 m/s, et de préférence inférieure à 12 m/s.

10. Procédé de cristallisation selon l'une quelconque des revendications précédentes, dans lequel la suspension épaisse de cristaux est envoyée dans une colonne de lavage, de préférence une colonne de lavage du type à piston ou du type à vis, et de préférence encore dans une colonne de lavage du type à piston.

11. Ensemble cristallisoir comprenant un échangeur de chaleur ayant une entrée et une sortie pour former une suspension épaisse de cristaux, une conduite de recirculation connectée entre l'entrée et la sortie pour la recirculation de la suspension épaisse de cristaux, formée dans l'échangeur de chaleur de la sortie à l'entrée et un séparateur connecté à l'échangeur de chaleur pour séparer les cristaux de la suspension épaisse, **caractérisé en ce que** la conduite de recirculation comprend une première section à une extrémité connectée à l'extrémité de sortie et avec son autre extrémité connectée à une pompe, et une deuxième section ayant une extrémité connectée à la pompe et l'autre extrémité connectée à l'entrée, dans lequel aucun filtre ni séparateur n'est inclus dans un chemin de recirculation entre la sortie de l'échangeur de chaleur et l'entrée de l'échangeur de chaleur.

12. Ensemble cristallisoir selon la revendication 11, comprenant un échangeur de chaleur à racloirs (SSHE) ayant une sortie et une entrée, et une conduite de recirculation reliant la sortie à l'entrée, **caractérisé en ce qu'**une pompe de recirculation est connectée à la conduite de recirculation, où le SSHE comprend une cuve globalement cylindrique ayant un diamètre prédéterminé et un moyen de raclage intérieur monté sur un rotor, rotatif autour d'un axe central de l'échangeur de chaleur, où une distance entre le rotor et une paroi du cristallisoir est comprise entre 0,1 et 0,4 fois le diamètre de l'échangeur de chaleur, de préférence au moins 15 mm.

13. Ensemble cristallisoir selon la revendication 11 ou 12, dans lequel la sortie de l'échangeur de chaleur a une forme conçue pour que la transition du déversement de l'échangeur de chaleur à racloirs dans la conduite de recirculation soit progressive de façon à maintenir une vitesse de suspension relativement constante ou de préférence une vitesse croissante vers le déversement de l'échangeur de chaleur à racloirs.

14. Ensemble cristallisoir selon l'une quelconque des revendications 11 à 13, dans lequel un diamètre de la conduite de recirculation est compris entre 100 mm et 2 000 mm, la longueur est comprise entre 10 m et 100 m et de préférence entre 15 m et 30 m afin de réduire le sous refroidissement de la suspension avant l'entrée de l'échangeur de chaleur à une valeur comprise entre 0 et 0,3 fois la région méta-stable.

15. Ensemble cristallisoir selon la revendication 11, comprenant un échangeur de chaleur à calandre (S&T HE), dans lequel l'échangeur de chaleur à calandre comprend un faisceau de tubes individuels qui ont chacun un diamètre intérieur supérieur à 25 mm, et de préférence supérieur à 36 mm.

# Fig 1

T

$T_{pure} B$

$T_{eq} B$

$\Delta T_{max}$

$T_{pure} A$

pure B in a liquid mixture with
Xeq wt % B

$T_e$

mixture with
(I-Xe) wt % A and Xe wt % B

Owt % B      Xe wt % B      Xeq wt %      100wt % B
                           at $T_{eq} B$

# Fig 2

$T_{eq}$

0-0,3*
$\Delta T_{max}$

0.5-0.9*
$\Delta T_{max}$

outflow
side

inflow
side

t

# Fig 3

*Fig 4*

Prior art

*Fig 5*

*Fig 6*

# Fig 7

# Fig 8

# Fig 9

pure
solvent

Feed

Concentrate